**Europäisches Patentamt**

**European Patent Office**

**Office européen des brevets**

(11) Veröffentlichungsnummer: **0 118 662**
**B1**

(12) **EUROPÄISCHE PATENTSCHRIFT**

(45) Veröffentlichungstag der Patentschrift:
**24.09.86**

(21) Anmeldenummer: **84100204.1**

(22) Anmeldetag: **11.01.84**

(51) Int. Cl.⁴: **H 02 K 7/108,** H 02 K 9/06,
F 16 D 7/00

(54) **Elektrischer Generator für ein Kraftfahrzeug.**

(30) Priorität: **14.02.83 DE 3305006**

(43) Veröffentlichungstag der Anmeldung:
**19.09.84 Patentblatt 84/38**

(45) Bekanntmachung des Hinweises auf die Patenterteilung:
**24.09.86 Patentblatt 86/39**

(84) Benannte Vertragsstaaten:
**DE FR GB**

(56) Entgegenhaltungen:
**EP-A-0 087 057**
**DE-A-2 942 737**
**DE-B-2 010 088**
**DE-U-1 734 886**
**GB-A-2 061 461**

(73) Patentinhaber: **ROBERT BOSCH GMBH, Postfach
50, D-7000 Stuttgart 1 (DE)**

(72) Erfinder: **Pflüger, Gerhard, Schellingstrasse 2,
D-7145 Markgröningen (DE)**

## Beschreibung

Die Erfindung betrifft einen elektrischen Generator für ein Kraftfahrzeug, mit einer vom Fahrzeugmotor antreibbaren Generatorwelle, mit einem Lüfterrad zur Kühlung des Generators und mit einer auf der Generatorwelle sitzenden, für den Antrieb des Lüfterrades dienenden Kupplung, die ein Kugellager umfaßt, deren Kugeln bei ihrem Umlauf um die Generatorwelle in gleichbleibendem radialem Abstand von der Generatorwelle durch einen gegen die Generatorwelle abgestützten, inneren Laufring gehalten sind und durch parallel zur Achse der Generatorwelle wirkende, durch eine Druckfeder ausgeübte Druckkräfte gegen einen ihrer Laufringe gespannt werden.

Aus der deutschen Patentanmeldung P 29 42 737.0 ist ein Generator mit drehzahlbegrenzter Lüfterkupplung bekannt, bei welcher nebeneinander auf der Generator-Antriebswelle zwei jeweils einreihige Kugellager angeordnet sind, wobei der innere Laufring des dem Lagerschild des Generators benachbarten Kugellagers unverschiebbar auf der Generatorwelle befestigt ist und der äußere Laufring mit dem Lüfterrad verbunden ist. Das andere Kugellager ist mit seinem Innenring auf der Generatorwelle festgelegt und liegt mit seinem Außenring an einer Tellerfeder an, welcher mit axialer Druckkraft gegen den mit dem Lüfterrad verbundenen Außenring des erstgenannten Kugellagers verspannt ist. Infolge der von der Tellerfeder ausgeübten Druckkraft wird das Lüfterrad bei steigender Antriebsdrehzahl so lange mitgenommen, bis das Widerstandsmoment des Lüfterrades das eingestellte Reibmoment zwischen diesen beiden Kugellagern erreicht und dann trotz weiter steigender Antriebsdrehzahl die Lüfterdrehzahl auf einem nur noch geringfügig anwachsenden oder sogar konstantbleibendem Wert hält.

Bekannt ist auch eine Vorrichtung zur Übertragung eines begrenzten Drehmomentes (DE-B-2 010 088), die ein Kugellager mit einem inneren und einem Äußeren Laufring aufweist; der innere Laufring wird dabei von zwei nebeneinanderliegenden Laufringen gebildet, welche miteinander vernietet sind und die Kugeln des Kugellagers zwischen sich einspannen. Die beiden nebeneinanderliegenden Laufringe üben durch die Vernietung Druck auf die Kugeln des Lagers aus und bewirken infolge der Reibung zwischen den Kugeln und den anliegenden drei Laufringen die Übertragung des begrenzten Drehmomentes.

Aus der DE-U-1 734 886 ist außerdem eine Rutschkupplung zur Verbindung einer Welle mit einem von der Welle angetriebenen Teil bekannt. Die antreibende Welle liegt mit ihrer Stirnseite an Kugeln an, welche in einer Ringnut des angetriebenen, koaxial zur Welle angeordneten Teiles gelagert sind. Mittels einer zusätzlichen, unter Federdruck stehenden Kugel, die axial zur Welle und dem angetriebenen Teil angeordnet ist und von der der Wellen-Stirnfläche gegenüberliegenden Seite auf Teile der genannten Kugeln drückt, wird der Kupplungsdruck ausgeübt.

Der Erfindung liegt die Aufgabe zugrunde, für Kraftfahrzeug-Generatoren eine konstruktiv besonders einfache, kostengünstige und zuverlässige Kupplung zur Mitnahme des Lüfterrades zu schaffen.

Diese Aufgabe wird gemäß der Erfindung durch die im kennzeichnenden Teil des Hauptanspruchs angegebenen Merkmale gelöst. Durch die in den Unteransprüchen aufgeführten Maßnahmen sind vorteilhafte Weiterbildungen der im Hauptanspruch angegebenen Lösung möglich.

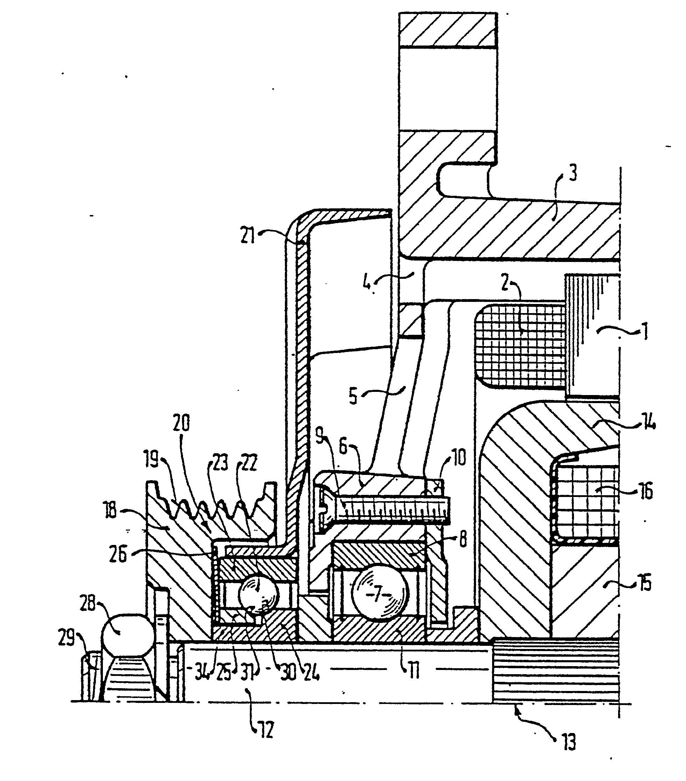

In der Zeichnung ist als ein Ausführungsbeispiel der Erfindung ein Drehstromgenerator für ein Kraftfahrzeug ausschnittsweise und in seinem axialen Halbschnitt wiedergegeben.

Der Generator hat ein aus Blechlamellen geschichtetes Ständerblechpaket 1 mit über seinem Umfang verteilt angeordneten Drehstromwicklungen 2. Das Ständerblechpaket sitzt in einem antriebsseitigen, napfförmig ausgebildeten Lagerschild 3 aus Aluminiumdruckguß, das an seiner Stirnseite mehrere Luftöffnungen 4 zwischen radialen Speichern 5 aufweist, mit welchen eine antriebsseitige Lagernabe 6 abgestützt ist. Diese enthält ein kräftiger ausgebildetes Kugellager 7, dessen Außenring 8 in die Nabe 6 eingepreßt ist und mittels mehrerer Schrauben 9 und eines Sicherungsringes 10 in der Nabe 6 gesichert ist. Der Innenring 11 dieses Haupt-Kugellagers sitzt auf dem aus dem Gehäuse stirnseitig vorstehenden Wellenstumpf 12 der im übrigen nur angedeuteten Generatorwelle 13, auf welcher ein Klauenpolrotor befestigt ist, von dem in der Zeichnung nur der vordere Klauenpolanker 14, der Kern 15 und die bei 16 angedeutete Erregerwicklung des Generators wiedergegeben ist.

Der Antrieb der Generatorwelle 13 erfolgt durch den Motor eines nicht wiedergegebenen Kraftfahrzeuges mit Hilfe einer Antriebsscheibe 18 und eines nicht wiedergegebenen Keilriemens, der auf der V-förmig profilierten Umfangsfläche 19 der Antriebsscheibe 18 aufliegt.

Zwischen der Antriebsscheibe 18 und dem Haupt-Kugellager 7 ist eine kraftschlüssige Kupplung 20 angeordnet, mit welcher das bei 21 angedeutete Lüfterrad des Generators bei ansteigenden Antriebsdrehzahlen des Fahrzeugmotors bis zu einer einstellbaren Grenzdrehzahl mitgenommen wird, derart, daß trotz weiterer Steigerung der Anriebsdrehzahl die Drehzahl des Lüfterrades 21 über den eingestellten Maximalwert hinaus nicht wesentlich gesteigert werden kann und demzufolge die für die Kühlung des Generators erforderliche Antriebsleistung begrenzt wird.

Im einzelnen umfaßt diese Kupplung ein einziges, einreihiges Kugellager mit mehreren Kugeln 22, die in einem mit dem Lüfterrad 21 fest verbundenen Außenring 23 geführt sind. Der Innenring dieses Kupplungskugellagers besteht aus zwei Teilen, nämlich einer einen nabenförmigen Ansatz 34 aufweisenden Hülse 24 und aus einem auf diesem Ansatz axial längsverschiebbaren Führungsring 25, der unter dem axialen Druck einer schwach gewölbten Tellerfeder 26 steht, die sich mit ihrer Randzone gegen die Antriebsscheibe 18 abstützt und mit ihrer inneren Ringzone gegen den Führungsring 25 drückt und dabei durch radial gerichtete Kräfte die Reibung zwischen dem Außenring 23 und der Nabe 24 bzw. dem Führungsring 25 auf ein durch die Verformung der Federscheibe 26 einstellbares Maß erhöht, das beim Anziehen der Mutter 28 auf dem Schraubzapfen 29 des Wellenstumpfes 12 ausgeübt werden kann.

Jeder der beiden Innenringe 24, 25 enthält eine von zwei konkaven Laufflächen 30, 31 für die Kugeln 22. Durch die zueinander schräg geneigten Laufflächen 30, 31 ergeben sich beim Spannen der Tellerfeder 27 radial nach außen gegen den Außenring 23 gerichtete Druckkräfte auf die Kugeln 22 und demzufolge ein erhöhtes Mitnahmemoment für das Lüfterrad.

Die Tellerfeder 26, die sich an der Riemenscheibe 18 abstützt, übernimmt gleichzeitig die Dichtfunktion für das Kupplungskugellager 20, und dessen Kugeln 22. Hierdurch ergibt sich eine kurzbauende, kostengünstige und weitgehend auf Serienteilen beruhende Lüfterkupplung.

## Patentansprüche

1. Elektrischer Generator für ein Kraftfahrzeug, mit einer vom Fahrzeugmotor antreibbaren Generatorwelle (13), mit einem Lüfterrad (21) zur Kühlung des Generators und mit einer auf der Generatorwelle sitzenden, für den Antrieb des Lüfterrades dienenden Kupplung (20), die ein Kugellager umfaßt, deren Kugeln (22) bei ihrem Umlauf um die Generatorwelle (13) in gleichbleibendem radialem Abstand von der Generatorwelle durch einen gegen die Generatorwelle abgestützten, inneren Laufring (24, 25) gehalten sind und durch parallel zur Achse der Generatorwelle wirkende, durch eine Druckfeder (26) ausgeübte Druckkräfte gegen einen ihrer Laufringe gespannt werden, dadurch gekennzeichnet, daß zwei nebeneinanderliegende, innere Laufringe (24, 25) vorgesehen sind, von denen jeder eine Lauffläche für die Kugeln (22) aufweist, daß dabei einer (24) der beiden inneren Laufringe einen nabenartigen Ansatz (34) hat, auf dem der andere Laufring (25) axial verschiebbar angeordnet ist, und daß die Druckfeder (26) einerseits an dem verschiebbaren Laufring (25) und andererseits an einem mit der Generatorwelle (12) verbundenen Bauteil, insbesondere an einer Antriebsscheibe (18) anliegt.

2. Generator nach Anspruch 1, dadurch gekennzeichnet, daß als Druckfeder (26) eine zur Generatorwelle (12) gleichachsige Ringscheibe (26) vorgesehen ist, die mit ihrer Bohrungszone an dem axialverschiebbaren Laufring (25) und mit ihrer Randzone an einem mit der Generatorwelle verbundenen Bauteil, insbesondere an der Antriebsscheibe (18) anliegt.

3. Generator nach Anspruch 2, dadurch gekennzeichnet, daß die Ringscheibe (26) als vorzugsweise schwach gewölbte Tellerfeder ausgebildet ist.

## Claims

1. Electric generator for a motor vehicle, having a generator shaft (13) drivable from the vehicle motor, having a fan wheel (21) for cooling the generator and having a clutch (20) mounted on the generator shaft and serving to drive the fan wheel, which clutch comprises a ball bearing, the balls (22) of which are held as they revolve around the generator shaft (13) at a constant radial distance from the generator shaft by an inner ball race (24, 25) supported against the generator shaft, and are held against one of their ball races by compressive forces acting parallel to the axis of the generator shaft and exerted by a compression spring (26), characterized in that two inner ball races (24, 25) situated next to each other are provided, each of which has a bearing surface for the balls (22), that at the same time one (24) of the two inner ball races has a hub-like projection (34) on which the other ballrace (25) is disposed in an axially displaceable manner, and that the compression spring (26) is adjacent on the one hand to the displaceable ball race (25) and on the other hand to a component joined to the generator shaft (12), in particular to a drive disc (18).

2. Generator according to Claim 1, characterized in that as the compression spring (26) a ringwheel (26) coaxial with the generator shaft (12) is provided which is adjacent in its hole area to the axially displaceable ball race (25) and in its edge zone to a component joined to the generator shaft, in particular to the drive disc (18).

3. Generator according to Claim 2, characterized in that the ringwheel (26) is constructed as a preferably slightly convex saucer spring.

## Revendications

1.- Générateur électrique pour un véhicule automobile, avec un arbre (13) de générateur susceptible d'être entraîné par le moteur du véhicule, avec une roue de ventilateur (21) pour le refroidissement du générateur, et avec un accouplement (20) placé sur l'arbre du générateur et assurant l'entraînement de la roue du ventilateur, cet accouplement comportant un palier à billes dont les billes (22) lors de leur rotation autour de l'arbre du générateur (13) sont maintenues à une distance radiale constante de l'arbre du générateur par une bague de roulement interne (24, 25) prenant appui contre l'arbre du générateur, et sont serrées par des efforts de pression exercés par un ressort de pression (26) contre une de leur bague de roulement, générateur caractérisé en ce qu'il est prévu deux bagues de roulement internes (24, 25) placées l'une à côté de l'autre, dont chacune comporte une surface de roulement pour les billes (22), l'une (24) de ces deux bagues de roulement internes comportant un appendice (34) en forme de moyeu, sur lequel est disposée en étant susceptible de coulisser axialement, l'autre bague de roulement (25), tandis que le ressort de pression (26) prend appui, d'une part, sur cette bague de roulement (25) susceptible de coulisser et, d'autre part, sur une pièce constitutive reliée à l'arbre (12) du générateur, notamment sur un disque d'entraînement (18).

2.- Générateur selon la revendication 1, caractérisé en ce qu'il est prévu comme ressort de pression (26) une rondelle annulaire (26), concentrique à l'arbre (12) du générateur, et qui s'applique par sa zone de passage sur la bague de roulement (25) susceptible de coulisser axialement et par sa zone de bordure sur la pièce constitutive reliée à l'arbre du générateur, notamment sur le disque d'entraînement (18).

3.- Générateur selon la revendication 2, caractérisé en ce que la rondelle annulaire (26) revêt de préférence la forme d'un ressort Belleville faiblement bombé.